# EUROPEAN PATENT SPECIFICATION

(11) **EP 3 329 136 B1**
(45) Date of publication and mention of the grant of the patent: **13.05.2020**
(21) Application number: 16831214.8
(22) Date of filing: 25.07.2016
(51) Int. Cl.: F16C 11/08, F16C 11/06, F16C 11/10, F16M 11/14

(54) **APPARATUS FOR RELEASABLY IMMOBILIZING AN ATTACHMENT TO AN EXTERNAL OBJECT**
VORRICHTUNG ZUM LÖSBAREN IMMOBILISIEREN EINER BEFESTIGUNG AN EINEM EXTERNEN OBJEKT
APPAREIL POUR IMMOBILISER DE MANIÈRE LIBÉRABLE UNE FIXATION À UN OBJET EXTERNE

(30) Priority: 27.07.2015 US 201514810253
(43) Date of publication of application: 06.06.2018
(73) Proprietor: Jungeberg, Kenneth, A., Liberty Township, OH 45011 (US)
(72) Inventor: Jungeberg, Kenneth, A., Liberty Township, OH 45011 (US)
(74) Representative: Diehl & Partner GbR
(86) International application number: PCT/US2016/043943
(87) International publication number: WO 2017/019637

(56) References cited:
- US-A- 4 980 805
- US-A- 4 980 805
- US-A- 5 857 782
- US-A1- 2013 077 904
- US-A1- 2013 077 904
- US-A1- 2013 112 059
- US-A1- 2013 112 059

## Description

### BACKGROUND

When working with a mechanical apparatus, it is often desirable to connect an element of the apparatus or the entire apparatus to an external object such as a shaft. The connected object or shaft can arise from nearly any source and range from a free standing or floating shaft to a securely positioned shaft or other object specifically designed for mounting an apparatus. A shaft can even be an element of another apparatus.

Depending on the mechanical situation, it is often desirable not only to make a connection to a shaft but to lock whatever is connected to the shaft in a particular orientation with respect to the shaft at least temporarily. Subsequently, it can become desirable to change the orientation of the connected or mounted element. To do this various kinds of locking devices have been provided in the past which can be locked in place and released for adjustment.

In general the state of the art for rotating and then locking a device at any point along a shaft is to use three separate mechanisms: one that allows translation along and rotation about the shaft, and two others that allow rotation about two mutually perpendicular axes that are themselves perpendicular to the axis of the shaft.

The complexity and size of an assembly of mechanisms to do this, along with the inefficiency of having to orient and then lock three mechanisms to achieve a particular position or orientation is cumbersome at best and can be frustrating for the operator as the operator attempts to align a connection in a three dimensional space. A single mechanism that concurrently allows rotation about all three axes and translation along the axis of the shaft in a single motion and is then fixed in place by a single locking motion is sometimes used.

Commonly, such a solution would use a spherical alignment bearing or joint with the bearing housing and the spherical core both split and would incorporate a clamping mechanism on the housing to tighten the housing on the core and consequently the core on the shaft. However, to achieve maximum clamping pressure of the bearing on the shaft, the split in the housing and the split in the core need to be aligned in substantially the same plane.

This again makes such a system difficult to use causing frustration by the user and unreliable clamping with variable clamping forces needed depending on how the core is aligned with the clamp. A better system is needed for clamping releasably, reliably and adjustably while aligning and maintaining alignment of the apparatus that is being clamped and positioned together without the need to focus on alignment of the elements comprising the core and clamping mechanism. An improved spherical bearing is know for example from the US 2013/0077904. However this configuration has high manufacturing costs.

### BRIEF DESCRIPTION OF THE INVENTION

A spherical bearing for releasably immobilizing an attachment to a shaft or other external object is provided. The spherical bearing comprises a truncated flexible spherical core with an annular hole through the center of the spherical core for appending the core on the shaft or external object. Segments around the spherical core are created by relief cuts in the spherical core, and deflection flexure points displaced from the annular hole are formed by the relief cuts in the core.

A housing surrounds the spherical core. The housing is designed to compress the core when a releasable clamping mechanism is applied to the housing. The clamping mechanism causes the segments of the core to deflect about the deflection flexure points toward the shaft immobilizing the core on the shaft and immobilizing the housing on the core. The spherical core generally has a spherical core diameter and the shaft or external object generally has a shaft or object diameter wherein the ratio of the spherical core diameter to shaft/object diameter is greater than about 1.5.

A method for releasably immobilizing an attachment to a shaft is provided. The method comprises providing a spherical core for a spherical bearing and boring an annular hole through the center of the core. Segments are created around the spherical core by making relief cuts in the core and arranging the relief cuts to provide deflection flexure points displaced from the annular hole.

A housing is provided that surrounds the spherical core and comprises a clamping mechanism for compressing the spherical core. An attachment is appended to the housing, and the shaft is disposed in the annular hole. The housing and the spherical core are compressed using the clamping mechanism. The clamping pressure deflects the segments about the deflection flexure points toward the shaft immobilizing the core on the shaft, the housing on the core and the attachment on the housing. Releasing the clamping mechanism releases the immobilization of the attachment when mobility of the attachment is desired.

In some contemplated embodiments, a two-piece housing is provided that is compressed around the spherical core with a strap clamp having a tightening mechanism. Such embodiments allow for enhanced hoop compression of the sphere for immobilization of an immobilized object such as a shaft.

### BRIEF DESCRIPTION OF THE DRAWINGS

Fig. 1 is a perspective view of a spherical bearing core with a relief cut pattern, not part of the invention;
Fig. 2 is a perspective view of a spherical bearing comprising a bearing core in a bearing housing not part of the invention;
Fig. 3 is a top view of a spherical bearing with a screw disposed in the housing ears not part of the invention;
Fig. 4 is a top cross sectional view of a spherical bearing comprising an attachment mounting hole in the housing not part of the invention;
Fig. 5 is perspective view of a spherical bearing with a hinged not part of the invention;
Fig. 6 is a top cross sectional view of a spherical bearing core with structural modifications not part of the invention;
Fig. 7 is a perspective view of a spherical bearing assembly according to one embodiment of the invention;
Fig. 8 is an exploded view of the spherical bearing assembly of Fig. 7;
Fig. 9 is a perspective view of a spherical core according to one embodiment of the invention;
Fig. 10 is a perspective view of a spherical core not part of the invention;
Fig. 11 is a perspective view of a spherical core not part of the invention;
Fig. 12 is a perspective view of a spherical core not part of the invention;
Fig. 13 is a perspective view of a spherical bearing assembly not part of the invention;
Fig. 14 is a perspective view of a spherical core not part of the invention;
Fig. 15 is a perspective view of a spherical bearing assembly according to one embodiment of the invention;
Fig. 16 is an exploded view of the spherical bearing assembly of Fig. 15;
Fig. 17 is a perspective view of a spherical bearing assembly according to one embodiment of the invention; and
Fig. 18 is a perspective view of a spherical bearing assembly not part of the invention.

A spherical bearing, sometimes called a spherical joint, is provided that permits not only ease of alignment but also easily maintained alignment when releasably immobilizing an attachment to a shaft. The joint comprises a spherical inner core which is surrounded by a housing around the core. The joint apparatus does not require careful alignment of the housing and core to efficiently perform its function. To overcome the problem of maintaining alignment and/or immobilization of the item attached to the bearing, the spherical inner core is modified with a series of structural modifications called relief cuts to assure maximum immobility when the bearing or joint is clamped on the shaft regardless of the orientation of the core relative to the clamp housing.

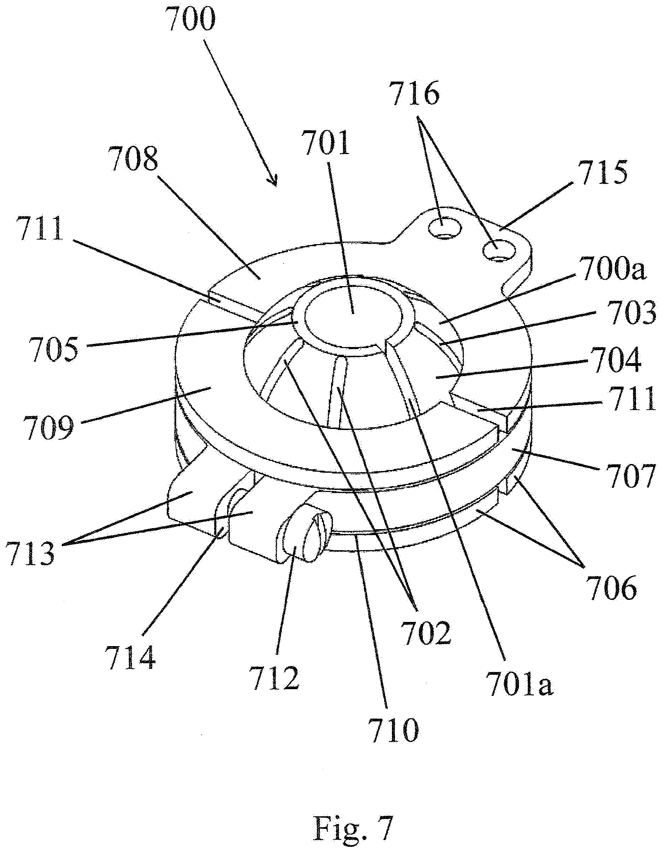

Figures 7-9, 15-17 disclose embodiments of the invention, the other figures illustrating other solutions not covered by the invention.

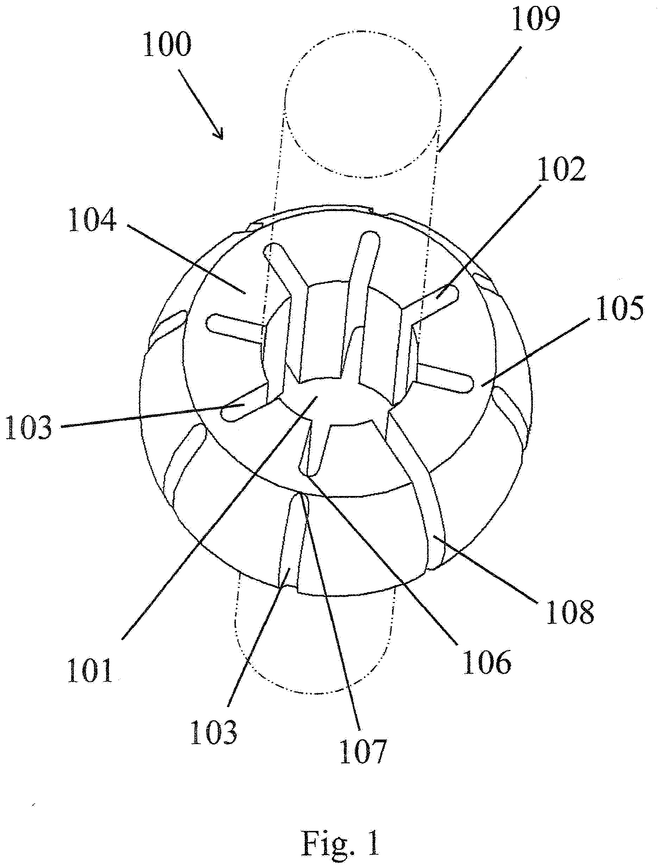

Fig. 1 shows an embodiment of such a spherical core **100** providing an annular hole **101** through the center of the core **100** for securing to an example external object, in this case a mounting shaft **109** that is round in shape, depicted with dotted lines to represent one possible attachment to the spherical core **100** according to the invention. As can be seen in Fig. 1, the core **100** is in the form of a truncated sphere **100.** The truncated sphere **100** of Fig. 1 is truncated both on top and similarly on the bottom of the sphere **100.** A truncated sphere is most commonly used for the core of the spherical bearing, and its depiction in Fig. 1 allows the structural modifications made to the sphere to be easily seen.

The spherical core **100** has a spherical core diameter and the shaft **109** has a shaft diameter or "object diameter" wherein the ratio of the spherical core diameter to the shaft/object diameter is greater than about 1.5. This relatively higher diameter ratio has at least two major advantages. First, the relatively higher spherical core to shaft/object diameter ratio allows for greater angular movement of the shaft **109** during initial positioning and prior to immobilization by the bearing. Second, the larger sphere size allows for a larger moment arm to resist angular tilting and side loads on the shaft.

Fig. 1 shows one pattern **102** that can be used for the relief cuts **103** in the spherical core **100.** Though not passing through the core **100** from the annular hole to the outside of the core **100,** the relief cuts **103** in the core **100** are made through the entire thickness of the core **100** from top to bottom so that both the inner and outer relief cut slot bottoms **106, 107** are substantially parallel to the axis of the annular hole **101** through the core **100.** In the case of relief cut **108** the cut does pass through the core **100** from the annular hole **101** to the outside of the core **100** as shown in Fig. 1. However, relief cuts **103** on the outer spherical surface of the core **100** extend fully from the top to the bottom of the core **100.**

The pattern of relief cuts **102** creates a series of effective deflection flexure points **105** for the spherical core segments **104.** The flexure points **105** are displaced from the centerline of the annular hole **101** such that pressure on the segments **104** will always cause them to deflect toward the shaft. This has several advantages among which are providing improved immobilization by uniform contact of the segments **104** with the shaft and permitting effective immobilization with minimal clamping pressure. Because the clamping pressure required can be minimal, the releasability of the core is also enhanced.

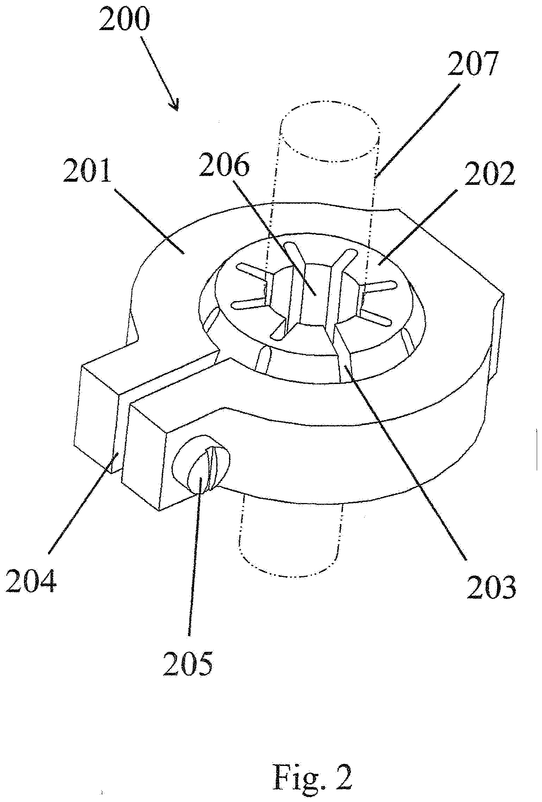

Fig. 2 shows a spherical bearing assembly **200** comprising an outer member or housing **201** where both the outer member or housing **201** and the inner member, the spherical core **202,** are split **203, 204** on planes passing substantially through the centerline of the annular hole **206** by relief cuts. The relief cuts constitute structural modifications, and the term can apply to the housing as well as the core. The housing **201** is provided with a clamping mechanism **205** that, when tightened, will compress the spherical core **202** causing it to tighten on a shaft **207** passing through the annular hole **206** of the core **202.** The resulting friction in the clamped components immobilizes the shaft in the core **202** and the core **202** in the housing **201** creating in effect a friction locked spherical joint. Unique to this design are a series of radial relief cuts in the core **202,** passing substantially through the axis of the annular hole **206,** that cause the core **202,** when compressed, to deflect uniformly around the shaft **207** regardless of the orientation of the split **203** in the core relative to the split **204** in the housing. The relatively high core diameter to shaft diameter ratio of greater than 1.5 contributes to the securement of the bearing.

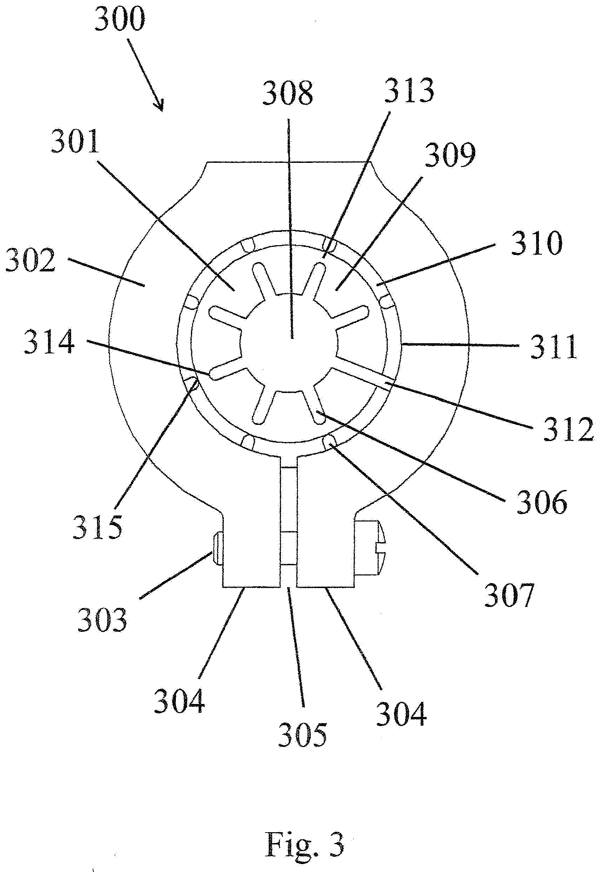

Fig. 3 is an embodiment of an assembled bearing assembly **300** showing a spherical core **301** encased in a bearing housing **302.** In Fig. 3 the housing is clamped down by a screw **303** that runs through the ears **304** of the clamp housing and is threaded into one of the ears **304** providing, when tightened, the pressure on the ears **304** that is necessary immobilize the core **301.**

Although in Fig. 3 a screw **303** is used to provide the force needed to close the housing **302** and render the core **301** immobile, any other sufficiently robust closing mechanism could be used to draw the housing together. For example, a bolt or a "C" clamp could be used to draw the ears **304** together.

Returning to the Fig. 3 embodiment, the bearing housing **302** is solid except for the split **305** as shown. Nonetheless, the force provided by the closing mechanism **303,** in this case a threaded screw **303,** is sufficient to effectively immobilize the bearing when tightened and release the bearing when loosened. This immobilization is optimized given the greater than 1.5 core diameter to shaft diameter ratio.

In Fig. 3 consider the arrangement of the relief cuts **306, 307.** The inner relief cuts **306** substantially radiate out from the central annular hole **308** with a core split **312** also present to allow the core **301** to deform slightly when the housing **302** is tightened. The cuts **306** segment the inner core surface and the inner segments **309** so formed can engage the surface of a shaft passing through the annular hole **308** as the core **301** is deformed by the closing pressure caused by the bearing housing **302.** In like manner the outer relief cuts **307** provide segments **310** that allow flexure of the core **301** and still allow the outer surface of the core **301** to engage the inner surface of the clamp housing **311** when the housing **302** is tightened.

One purpose of the relief cuts **306, 307** is to increase the flexibility of the core **301** so that it can flexibly engage the shaft and the bearing housing **302** surface. The cuts **306, 307** also provide extra room inside the bearing assembly **300** for flexing to occur and minimize the closing force needed to immobilize the core **301.**

In Fig. 3 the inner relief cuts **306** are opposite the outer relief cuts **307.** Although such an arrangement is not necessary for the invention to successfully operate, making the relief cuts in this manner provides additional flexibility.

This pattern of relief cuts **306, 307** creates a series of effective deflection flexure points **313** for the spherical core segments **309, 310.** The flexure points **313** are displaced from the centerline of the shaft bore **308,** that is the annular hole **308,** such that pressure on the segments **309, 310** will always cause them to deflect toward the shaft, and the deflection flexure points **313** so formed will allow the spherical core **301** to accommodate minor variations in the shape of the central shaft used and in the shape of the bearing housing **302** while maximizing the contact surface area between the inner core segments **309** and the shaft and the outer core segments **310** and the housing **302.** This provides improved immobilization by uniform contact of the segments **309, 310** permitting effective immobilization with minimal clamping pressure. Because the clamping pressure required can be minimal, especially with the greater than 1.5 core diameter to shaft diameter ratio, the reliability and releasability of the bearing assembly **300** are enhanced.

Because the inner and outer relief cut bottoms **314, 315** are parallel with each other and with the annular hole **308** axis, from another perspective the effect of this arrangement is to provide a flexible cylindrical band that envelops within the core **301** and is defined by the outer ends **314** of the inner relief cuts **306** and the inner ends **315** of the outer relief cuts **307** and accommodates imperfections in the shaft (not shown in Fig. 3) or in the bearing housing **302.**

Further, in the event a shaft is used that is not substantially round, the bearing assembly **300** can accommodate and maximize its ability to immobilize the shaft.

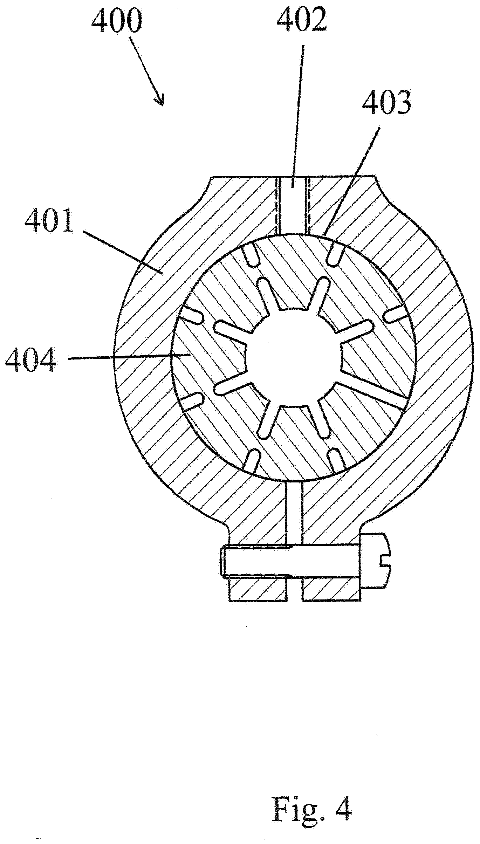

In another embodiment Fig. 4 shows a bearing assembly **400** where the bearing housing **401** comprises a threaded mounting receptacle **402.** This embodiment demonstrates how the bearing housing **401** could be modified to allow the assembled bearing **400** to be affixed to another piece of apparatus allowing the other piece of apparatus to be mounted on the bearing assembly **400** or allowing the bearing assembly **400** to be mounted on another piece of apparatus. In this way the bearing assembly **400** can be used to join two or more pieces of apparatus together. To do so one includes additional mounting receptacles.

As shown in Fig. 4 the mounting receptacle **402** runs through the bearing housing **401** and extends to the outer surface **403** of the bearing **404** and can be used, if needed, to help immobilize the bearing when a threaded apparatus actually contacts the surface of the core **403.**

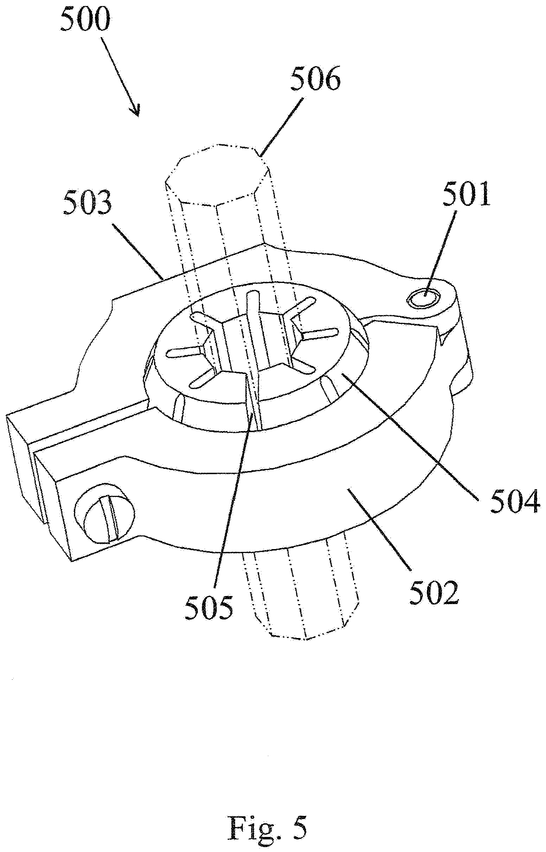

In yet another embodiment Fig. 5 shows a bearing assembly **500** where a hinge **501** comprises a part of the bearing housing **502.** This is another example of the flexibility in design of which the invention is capable. Fig. 5 depicts a shaft **506** that is not round in shape, depicted with dotted lines to represent one possible interface with the bearing core **504** according to the invention.

In some applications it is necessary to assemble the bearing with the bearing housing at the point of use, as where fit or size place restrictions on the installation. Fig. 5 demonstrates an embodiment of this flexibility. In this embodiment the hinge **501** has been added so that if the bearing core **504** is already installed on a shaft **506,** the housing **502** can be installed without the need to slide the housing **502** along the shaft. Rather, the housing **502** can be installed over the bearing core **504** from a position perpendicular to the shaft **506.**

From another aspect the housing can be constructed in two parts and secured using two sets of ears similar to elements **304** shown in Fig. 3. An example of such an arrangement could be a pillow block that is mounted on a surface. The pillow block has a bearing core secured between the pillow block base on one side and the pillow block retainer on the other side. Both ends of the pillow block can be secured together with screws similar to the ear **304** and screw **303** arrangement of Fig. 3.

In embodiments where the bearing core **504** is made of sufficiently flexible material, the bearing core **504** can be slipped over a shaft, because the bearing core **504** includes a split **505.** The housing **502** can then be installed over it even if the housing is made of non-flexible material. Such flexibility is very useful when the ends of a shaft are inaccessible, but a spherical bearing needs to be installed.

In another embodiment the core can be cut through as in drawing element **108** shown in Fig. 1 but in several different places, and the multi-piece core can be used to surround a shaft and can be held in place by the housing. The housing can then be clamped and tightened to releasably immobilize the bearing on the shaft.

In yet another embodiment the core can be hinged for placement around a shaft with a clampable housing placed over the hinged core to immobilize the bearing on the shaft.

Returning to the embodiment shown in Fig. 5, the side of the housing **502** is flattened **503** to allow the bearing **500** to be mounted on a flat surface. In other embodiments the housing can similarly be modified in many different ways to accommodate the practical needs of the application.

For example, in a different embodiment where space is limited the housing can be split into two or more pieces that can be assembled around a core and strapped together with a strap clamp. Tightening the strap clamp then compresses the housing around the core and can immobilize or free the bearing depending on how tightly the strap clamp is adjusted.

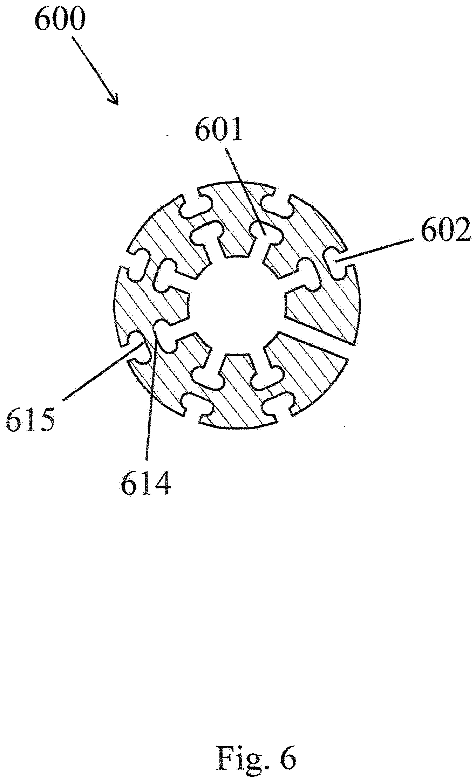

In yet another embodiment Fig. 6 shows how the spherical core **600** can be modified to provide enhanced flexibility and to enhance the banding effect discussed above in reference to Fig. 3. In this embodiment the outer ends **614** of the inner relief cuts **601** and the inner ends **615** of the outer relief cuts **602** are broadened to increase the flexibility of the spherical core **600.** By choosing the design of the relief cuts, different properties of flexibility can be achieved and other effects such as enhanced band strength, deflection, flexure and shaft or housing contact pressure distributions can be achieved.

In other embodiments a bearing assembly can comprise different materials to modify the performance of the bearing assembly.

For example, different materials can be chosen to cause the bearing to provide more or less "lash." In one example a very flexible bearing material can be chosen to allow the bearing to absorb limited amounts of force when a torque is suddenly imposed on either a central shaft or the bearing housing.

In another embodiment, combinations of materials can be chosen to provide the contact surfaces of the inner segments and the outer segments different coefficients of friction thus allowing controlled slippage of the joint if desired. Additionally, the materials used for the bearing housing can also be chosen to provide specific frictional and/or torque response properties.

In another embodiment the surface finish of the annular hole and/or the spherical surfaces can be modified to provide specific frictional response. For example, the surfaces can be modified or coated to enhance frictional binding when the bearing is clamped.

It will be appreciated that in some anticipated embodiments of the invention, the housing can be constructed without ears **304** as in the embodiment depicted in Fig. 3, but instead with one or more relief cuts splitting the housing. For example, Fig. 7 depicts a spherical bearing assembly **700** including a spherical core **700a** having a core split **701a,** a chamfered truncation **705** at each opening of an annular hole **701,** and a pattern **702** of relief cuts **703** creating spherical core segments **704.** A strap clamp **707** surrounds the bearing housing **706** to compress the housing **706** on the bearing core **700a.**

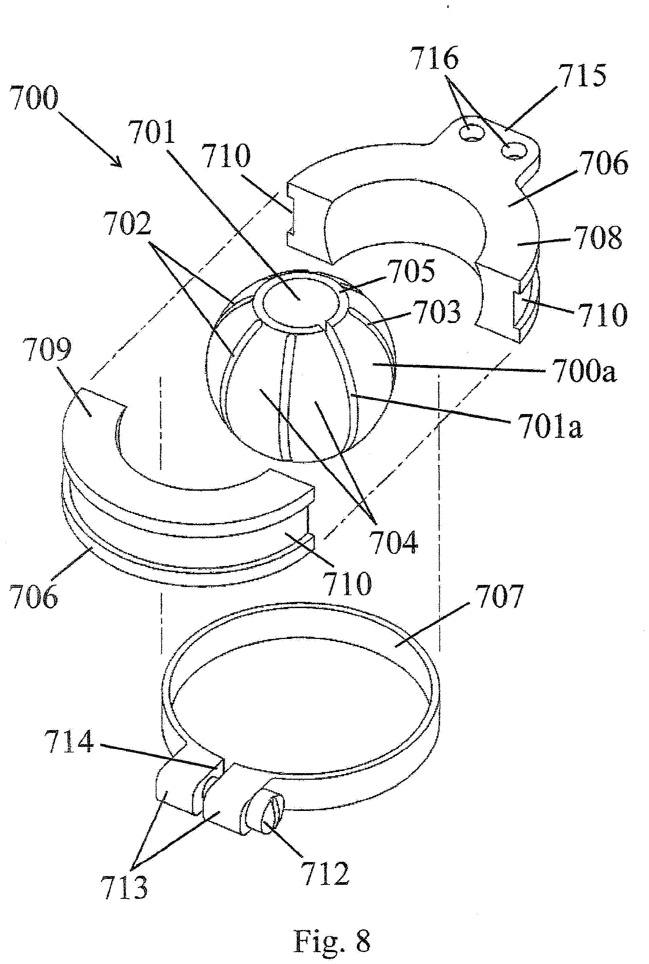

Compare Fig. 7 to the exploded view of the same spherical bearing assembly **700** of Fig. 8. The relief cuts **703** extend fully from the chamfered truncation **705** at the top of the core **700a** to matching truncation (not shown in Figs. 7 and 8) at the bottom of the core **700a.** The bearing housing **706** is divided into housing base **708** and housing cap **709** portions separated by a housing split **711.** The strap clamp **707** is positioned to fit, when attached to the bearing assembly **700,** into a circular recess **710** that extends around both the housing base **708** and housing cap **709** to secure the base **708** and cap **709** together such that when a sufficient clamping force is applied to the strap clamp **707,** the bearing is immobilized. A tightening screw **712** extends through two ears **713** at a clamp split **714** to allow for tightening of the strap clamp **707** to sufficient clamping force for immobilization. The housing base **708** includes a mounting flange **715** with mounting holes **716** to allow for fixed engagement of the housing base **708** to an external object such that any shaft or other engaged member will remain in a relative fixed position when immobilized by the bearing assembly **700.**

The versatility of the invention is demonstrated in the embodiments depicted in Figs. 7 and 8. The depicted spherical joint bearing **700** utilizes a two piece housing **706** and strap clamp **707** coupled with a simplified spherical core **700a** to achieve enhanced strength, functionality, and manufacturing efficiency. The housing base **708** and housing cap **709** used in conjunction with the strap clamp **707** provide a flexible housing configuration with optimal conformity to the spherical core **700a.** When tightened, the strap clamp **707** develops uniform hoop tension which, when applied to the nearly constant cross section housing base and cap **708** and **709** separated by housing split **711,** works to reduce the diameter of the housing **706** and compresses the spherical core **700a** in a very uniform, belt-like manner. This uniform compression of the spherical core **700a** allows the use of a simplified spherical core **700a** which contains only outer relief cuts **703.**

In a typical spherical core **100,** as depicted in Fig. 1, flexure points **105** created between the inner and outer relief cuts **103** form a functional flexure ring in the spherical core. When stiffer housing configurations are used, it becomes increasingly advantageous to increase the diameter of this flexure ring, which in essence moves the flexure points **105** closer to the outer diameter of the spherical core **100.** Consider the use of a relatively rigid housing, such as in the context of the housing **200** in Fig. 2 or the housing created by the bearing assembly **502** and hinge **501** in Fig. 5. Such a housing when compressed to a reduced diameter by a clamping mechanism, such as the clamping mechanism **205** depicted in Fig. 2, will tend to deflect unevenly with a greater diameter reduction sideways than lengthwise, thus squeezing the spherical core **202** (**504** in Fig. 5) in a more nutcrackerlike fashion. For these types of housings, a spherical core with a maximized diameter flexure ring is desirable since wider spaced flexure points allow the spherical core segments to deflect more easily toward the contained external object such as a shaft. In comparison, a less rigid strap clamp type housing such as the housing **706** in Fig. 7 applies a near uniform compression load to all spherical core segments **704** irrespective of the flexure ring diameter. Thus, with further reference to Fig. 7, the spherical core **700a** used in conjunction with the strap clamp housing **706** incorporates a minimum diameter flexure ring located directly adjacent the shaft annular hole **701,** effectively eliminating the inner relief cuts.

It follows that strap clamp embodiments of the invention, such as those shown and described in Figs. 7 and 8, not only provide optimum housing-to-spherical bearing conformance and spherical bearing-to-shaft/external object conformance, but such embodiments also utilize geometric configurations that have lower manufacturing costs. For example, in Figs. 7 and 8, the depicted two piece housing **706** can be more easily machined or molded since it does not contain an enclosed spherical cavity such as the housing **201** depicted in Fig. 2. Similarly, the spherical core **700a** can be more efficiently machined or molded since inner relief cuts have been completely eliminated. In addition, usable strap clamps of the type contemplated to be used with the current invention are also commercially available and relatively inexpensive.

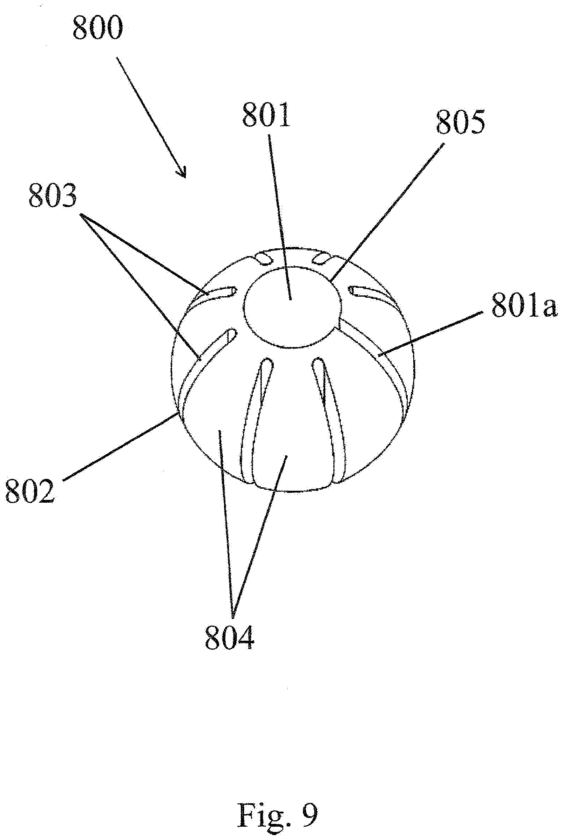

Although embodiments of the invention have been shown and described in Figs. 7 and 8 as including a spherical core **700a** having a chamfered truncation **705,** it will be appreciated that spherical cores lacking such chamfers or otherwise with minimal additional truncation are also contemplated within the intended scope of the invention. For example, Fig. 9 depicts a spherical core **800** having spherical core segments **804** separated by a pattern **802** of relief cuts **803** wherein the spherical outer surfaces of the segments **804** and core split **801a** extend to an edge **805** of the annular hole opening **801** with no truncated chamfer separating the edge **805** from the spherical outer surfaces of the segments **804,** such that the amount of sphere truncation is minimized to that required to accommodate a shaft or other immobilized object. Such minimized truncation also maximizes the sphere area captured within the housing when the core **800** and its immobilized object within the bearing assembly are positioned in a maximum rotation position prior to immobilization.

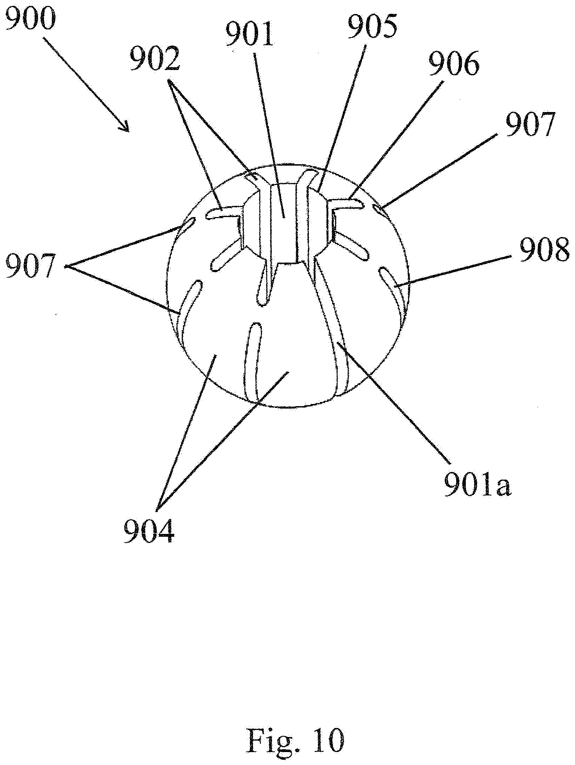

It will be further appreciated that similar minimally truncated spheres can also include both inside and outside relief cuts. For example, Fig. 10 depicts a spherical core **900** having spherical core segments **904** separated by a pattern **902** of inner relief cuts **906** and a pattern **908** of outer relief cuts **907** wherein the spherical outer surfaces of the segments **904** and core split **901a** extend to an edge **905** of the annular hole opening **901,** with no truncated chamfer separating the edge **905** from the spherical outer surfaces of the segments **904.** Sphere truncation is also minimized in this embodiment to that required to accommodate a shaft or other immobilized object.

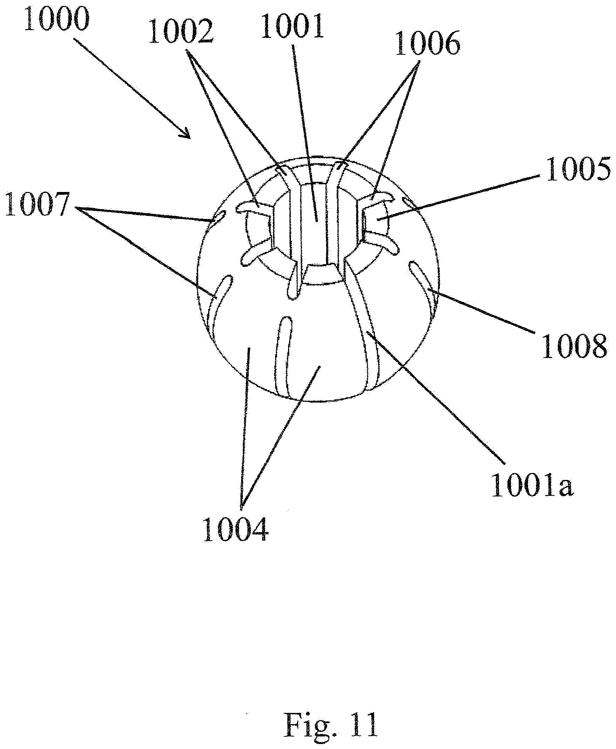

The invention also contemplates a combination of inside and outside relief cuts in the context of truncated spheres. For example, Fig. 11 depicts a spherical core **1000** of the invention having spherical core segments **1004** similarly separated by a pattern **1002** of inner relief cuts **1006** and a pattern **1008** of outer relief cuts **1007** wherein the spherical outer surfaces of the segments **1004,** annular hole **1001,** and core split **1001a** extend to a flat truncation surface **1005** separating the spherical outer surfaces of the segments **1004** from the annular hole **1001.**

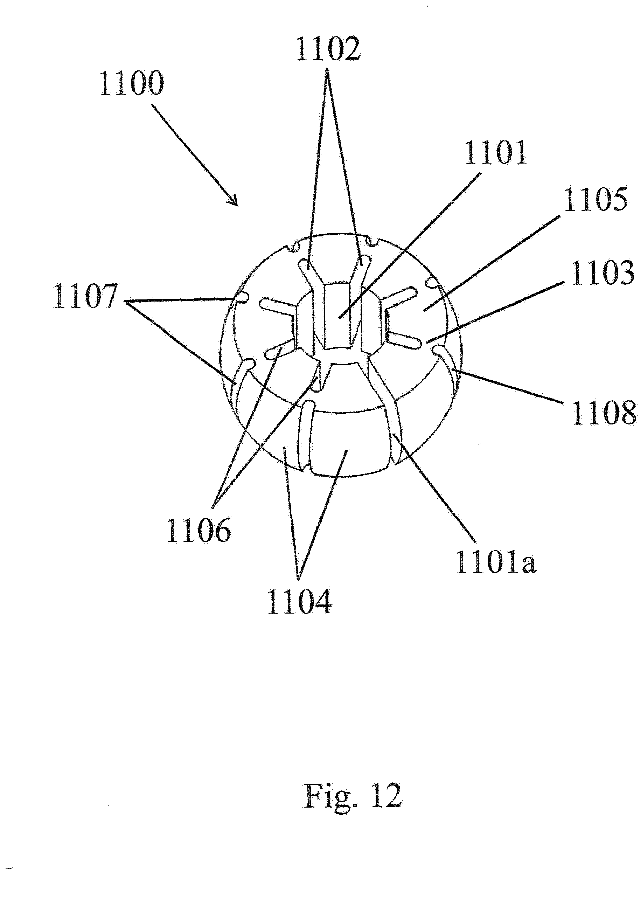

The invention further contemplates a combination of inside and outside relief cuts in the context of highly truncated spheres. For example, Fig. 12 depicts a spherical core **1100** of the invention having spherical core segments **1104** similarly separated by a pattern **1102** of inner relief cuts **1106** and a pattern **1108** of outer relief cuts **1107** wherein the spherical outer surfaces of the segments **1104,** annular hole **1101,** and core split **1101a** extend to a flat high truncation surface **1105** separating the spherical outer surfaces of the segments **1104** from the annular hole **1101.** Both inner relief cuts **1106** and outer relief cuts **1107** extend from the top flat truncation surface **1105** to a matching flat truncation surface (not shown in Fig. 12) at the bottom of the core **1100.**

Compare the spherical core **1100** of Fig. 12 with the highly truncated core **100** of Fig. 1. From such comparison, it will be appreciated that the invention contemplates that outer relief cuts, such as the outer relief cuts **1107** of Fig. 12 can extend into either the slightly or highly truncated surfaces of a sphere, such as into the high truncation surface **1105** of Fig. 12, or be limited to extending only within outer spherical surfaces of the segments, such as in the outer relief cuts **103** of Fig. 1. However, in general, spherical core flexibility is increased by moving flexure points (or flexure ring) farther away from the center of the core.

For example, the positioning of the flexure points **105** in Fig. 1 closer to the outer spherical surfaces of the segments **104** in Fig. 1 would tend to increase flexibility versus the more inside positioning of the flexure points **1103** in Fig. 12, provided both cores **100** and **1100** utilized similar construction materials and dimensioning.

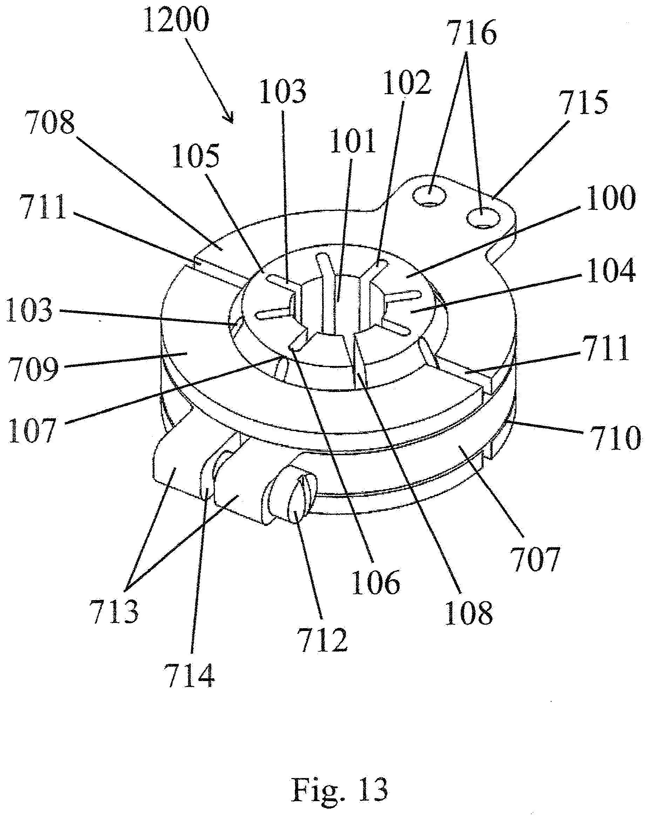

As an example of a further combination of elements as contemplated by the invention, Fig. 13 depicts a spherical bearing assembly **1200** of the invention having a spherical core **100** of the type depicted in Fig. 1 combined with a bearing housing **706,** housing base **708,** housing cap **709,** and strap clamp **707** of the types depicted in Fig. 7.

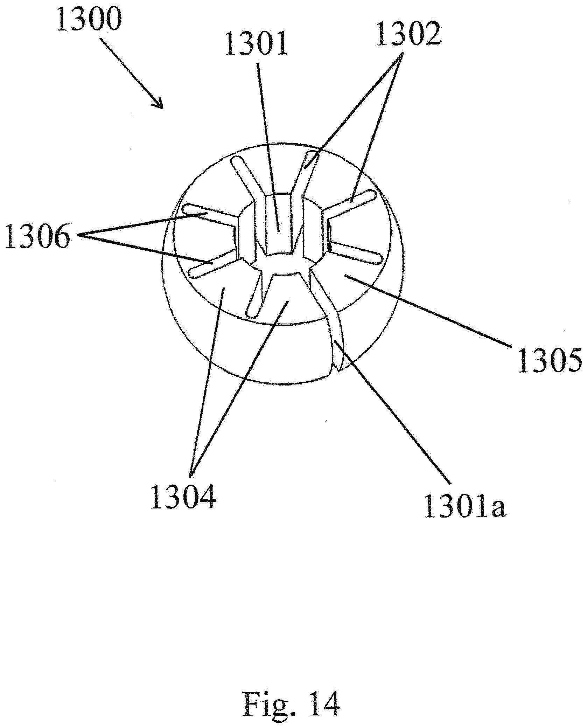

The invention also contemplates spherical cores having inner relief cuts only. For example Fig. 14 depicts a highly truncated spherical core **1300** having spherical core segments **1304** separated by a pattern **1302** of inner relief cuts **1306** wherein the segments **1304** are separated only by the inner relief cuts **1306** and a pattern of outer relief cuts is absent along the spherical outer surfaces of the segments **1304** except at the core split **1301a,** the annular hole **1301** being separated from the spherical outer surfaces of the segments **1304** by the high truncation surface **1305.**

It will be appreciated that the strap clamps can incorporate different types of tightening mechanisms within the intended scope of the invention. In addition, joint assemblies of the invention can also incorporate different type of mounting features to enable fixed immobilization of immobilized objects.

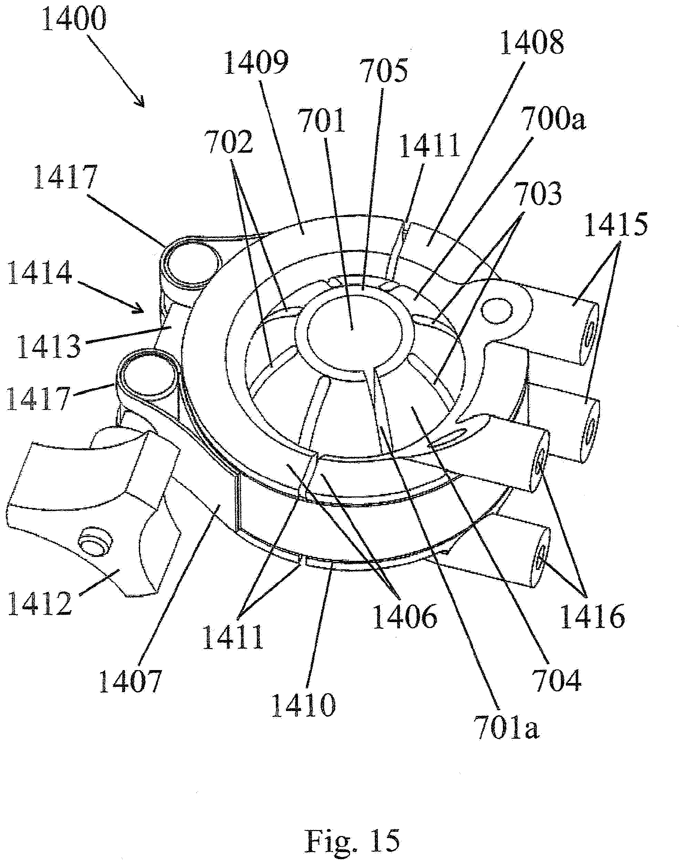

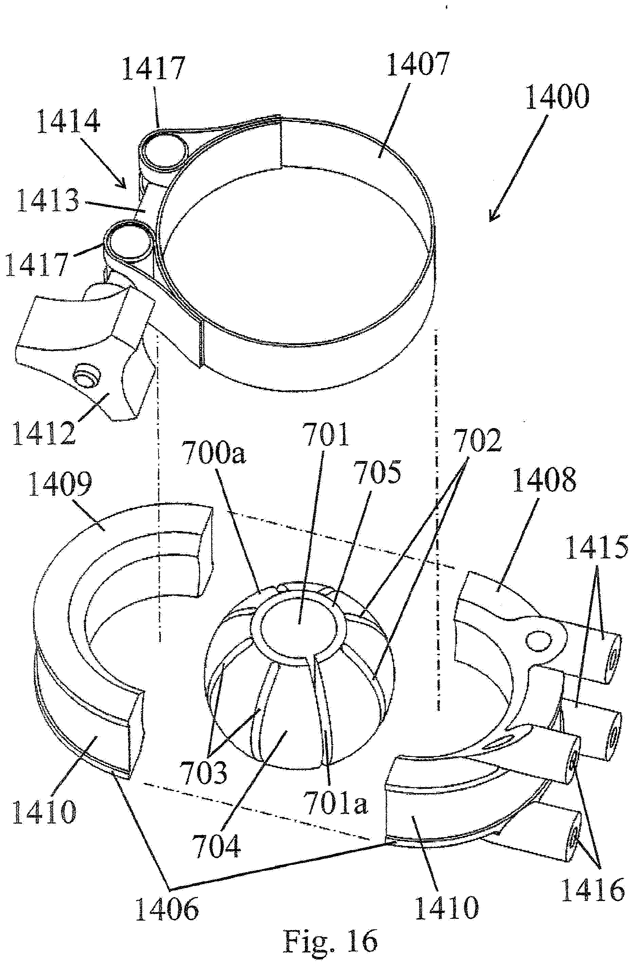

For example, Fig. 15 depicts a spherical bearing assembly **1400** of the invention utilizing a spherical core **700a** of the type depicted in Fig. 7 having a pattern **702** of outside relief cuts **703** only that extend up to a low truncation surface **705** near the opening of the annular hole **701.** The housing base **1408** and housing cap **1409** of the bearing housing **1406** are compressed around core **700a** with a strap clamp **1407** that engages both the base **1408** and cap **1409** and compresses the housing **1406** at a recess **1410** to compress and immobilize the core **700a.** The strap clamp **1407** is tightened using a T-bolt **1413** extending through two strap ears **1417** located at the strap split **1414** and adjusted to an immobilization tightness with a tightening knob **1412.** Fig. 16 is an exploded view of the bearing assembly **1400** of Fig. 15, with the base **1408** and **1409** separated from each other at the housing split **1411** depicted in Fig. 15.

Comparing Figs. 15 and 16, the housing base **1408** includes multiple mounting legs **1415** each having a threaded hole **1416.** In the embodiment depicted, the mounting legs **1415** are formed directly into the structure of the base **1408** and commonly orient the threaded holes **1416** to allow for engagement of a common planar surface (not shown). This arrangement allows the bearing assembly **1400** to immobilize an immobilized object in a fixed relation to the planar surface once the immobilization has been completed by tightening the strap clamp **1407** with the T-bolt **1413.** The particular arrangement of four mounting legs **1415** in a square pattern is particularly useful in that it allows for easy detachment and 90-degree or 180-degree rotation of the housing **1408** from the planar surface with appropriate threaded hardware (not shown). Although the invention is shown and described using a four-legged attachment arrangement, it will be appreciated that other fixed attachment arrangements are also within the anticipated scope of the invention.

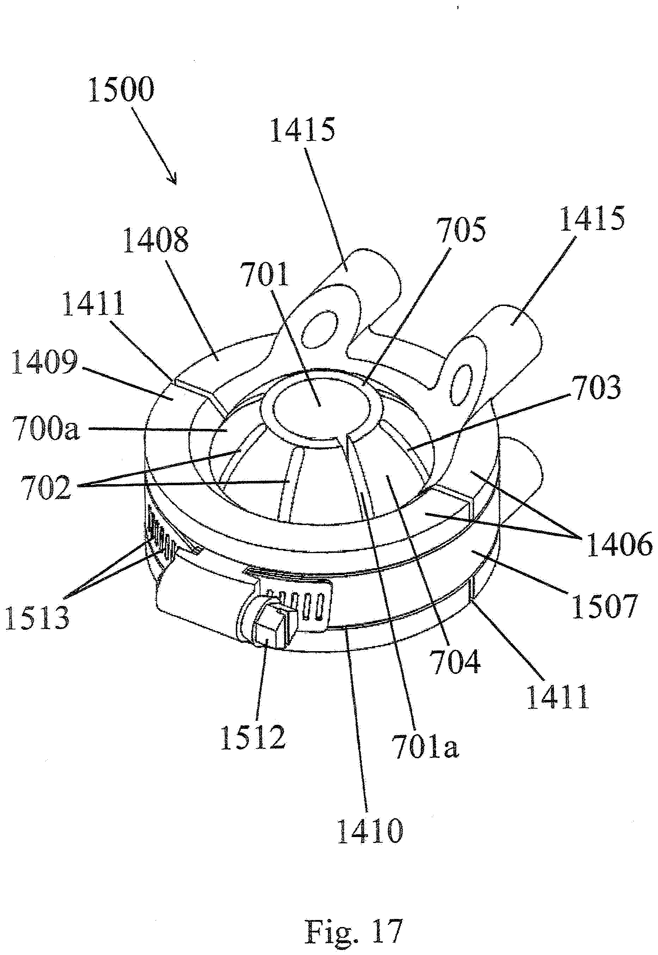

Fig. 17 depicts a bearing assembly **1500** of the invention also utilizing a spherical bearing core 700a of the type depicted in Figs. 7, 15, and 16 and having bearing housing **1406** of the type depicted in Figs. 15 and 16, including a housing base **1408** separated from a housing cap **1409** by a housing split **1411,** with four mounting legs **1415** positioned on the housing base **1408.** A strap clamp comprises a hose clamp **1507** that compresses the base **1408** and cap **1409** of the housing around the recess **1410,** but is tightened using a tightening screw **1512** that engages notches **1513** located along portions of the length of the clamp **1507.**

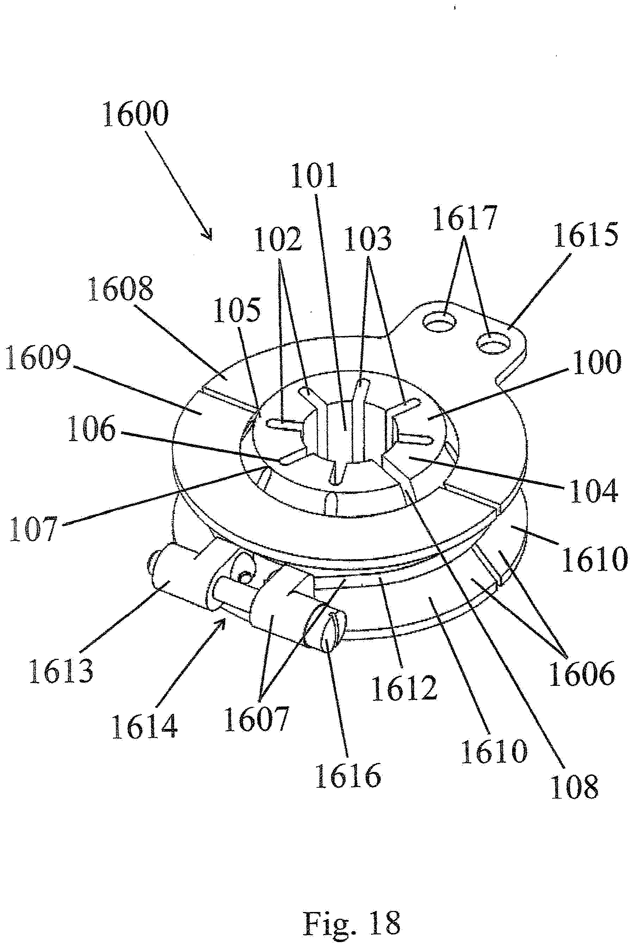

Although embodiments of the invention utilizing a strap clamp for compressing the housing around the core have been shown incorporating flat, belt-like straps, it will be appreciated that other strap-equivalent structures can also be used for effecting hoop compression around the housing, such as wires, chains, ropes, cables, high-tensile strength bands, and other circular linkages. For example, Fig. 18 depicts a bearing assembly **1600** of the invention having a spherical core **100** with high truncation of the type depicted in Figs. 1 and 13. The housing base **1608** and housing cap **1609** of the bearing housing **1606** include a deep recess **1610** to accommodate a cable clamp **1607** having a cable **1612** and a cable tensioning mechanism **1613** to provide immobilizing hoop compression against the housing **1606** and core **100.** The cable tensioning mechanism **1613** includes a cable tightening screw **1616** at the cable split **1614** to allow for tensioning of the cable clamp **1607** with resulting compression of the housing **1606.** The housing base **1608** includes a mounting flange **1615** with mounting holes **1617** to allow for fixed engagement of the housing base **1608** to an external object and for relative immobilization of an object immobilized by the bearing assembly **1600.**

Those skilled in the art will realize that this invention is capable of embodiments different from those shown and described. It will be appreciated that the detail of the structure of the disclosed apparatuses and methodologies can be changed in various ways without departing from the invention itself. The invention is defined by the appended claims.

## Claims

1. A spherical bearing (700, 1400, 1500) for releasably immobilizing an attachment to an external object (109, 207, 506), said bearing (700, 1400, 1500) comprising: a spherical core (700a, 800) having a top, a bottom, a center, a spherical outer periphery, and an annular hole (701, 801) through said center of said spherical core (700a, 800) for appending said spherical core (700a, 800) to the external object (109, 207, 506), said annular hole (701, 801) extending from said top to said bottom of said spherical core (700a, 800), wherein a plurality of segments (704, 804) are positioned radially around said annular hole (701, 801), said segments (704, 804) being only defined by a plurality of outer relief cuts (702, 802) formed in said spherical outer periphery and a single core split (701a, 801a) extending from top of said annular hole (701, 801) along said spherical outer periphery to the bottom of said annular hole (701, 801), wherein inner relief cuts extending around said annular hole (701, 801) are absent, wherein a plurality of deflection flexure points, each said point formed at an inner end of one said outer relief cut (702, 802) arc provided in said spherical core (700a, 800); a flexible housing (706, 1406) surrounding said spherical core (700a, 800) said flexible housing (706, 1406) being capable to carry the attachment; and a releasable clamping mechanism (707, 1407) for radially clamping said flexible housing (706, 1406) to compress said spherical core (700a, 800), said clamping mechanism (707, 1407) being positioned to reduce the diameter of said flexible housing (706, 1406) when said clamping mechanism (707, 1407) is tightened to cause said segments (704, 804) to deflect about said deflection flexure points and conform to the outer surface of the external object (109, 207, 506), thereby immobilizing said spherical core (700a, 800) on the external object (109, 207, 506) and immobilizing said housing on said spherical core (700a, 800).

2. The spherical bearing (700, 1400, 1500) according to claim 1, said spherical core (700a, 800) being ball-shaped and said sphericalouter periphery extending over the whole surface of said spherical core (700a, 800) except for said annular hole (701, 801).

3. The spherical bearing (700,1400,1500) according to any of claims 1 or 2, said spherical bearing (700, 1400, 1500) having a truncated spherical core (700a), said spherical outer periphery extending from said top to said bottom of said spherical core (700a, 800).

4. The spherical bearing (700,1400,1500) according to any of claims 1 to 3, wherein said plurality of outer relief cuts (702, 802) extends from said top to said bottom of said spherical core (700a, 800).

5. The spherical bearing (700, 1400,1500, according to any of claims 1 to 4, the attachment being mounted to said flexible housing (706, 1406) of said spherical bearing (700, 1400, 1500).

6. The spherical bearing (700, 1400,1500) according to any of claims 1 to 5, wherein the attachment can be positioned by holding the attachment in the desired position and can be immobilized by tightening a single clamp (707, 1407, 1507) on said housing (706, 1406).

7. The spherical bearing (700, 1400,1500) according to any of claims 1 to 6, wherein a relief cut (701a, 801a) splits said spherical core (700a, 800) between said annular hole (701, 801) and said spherical outer periphery of said spherical core (700a, 800) to increase the flexibility of said spherical core (700a, 800) when it is compressed by said housing.

8. The spherical bearing (700,1400,1500) according to any of claims 1 to 7, wherein at least one relief cut (701a, 801a) splits a side of said housing, said at least one relief cut providing space to compress said housing and immobilize said bearing.

9. The spherical bearing (700,1400,1500) according to any of claims 1 to 8, wherein said flexure points (are displaced from said annular hole (701, 801) such that pressure applied by said housing on said segments (704, 804) causes the segments (704, 804) to deflect toward the external object (109, 207, 506) to provide uniform contact of said segments (704, 804) with the external object (109, 207, 506).

10. The spherical bearing (700,1400,1500) according to any of claims 1 to 9, wherein said spherical core (700a, 800) and said housing are modified with relief cuts to maximize immobility when said bearing is clamped on an external object (109, 207, 506) that is a shaft regardless of the orientation of core relief cuts relative to housing relief cuts.

11. The spherical bearing (700, 1400, 1500) according to any of claims 1 to 10, said spherical bearing (700, 1400, 1500) further comprising a releasable strap clamp (707, 1407, 1507), said strap clamp (707, 1407, 1507) comprising: a circumferential strap (707, 1407, 1507), said strap extending around the circumference of said housing (706, 1406); and a strap tightener (712, 1412, 1512), said strap tightener (712, 1412, 1512) being positioned to reduce the diameter of said circumferential strap (707, 1407, 1507) to exert hoop compression around said housing (706, 1406) to compress said spherical core (700a, 800) and reduce the diameter of said housing (706, 1406) when said clamping mechanism (707, 1407, 1507) is tightened to cause said segments (704, 804) to deflect about said deflection flexure points and conform to the outer surface of the external object (109, 207, 506).

12. The spherical bearing (700, 1400, 1500) according to any of claims 1 to 10, said housing being a two-piece flexible housing (706, 1406) and said releasable clamping mechanism (707, 1407, 1507) comprising a strap clamp (707, 1407, 1507), said strap clamp (707, 1407, 1507) allowing for compression of said two-piece flexible housing (706,1406) to compress said spherical core (700a, 800) and immobilize an external object (109, 207, 506).

13. The spherical bearing (700, 1400, 1500) according to any of claims 1 to 12, said housing being a two-piece housing (706, 1406) having a housing base(708, 1408) and a housing cap (709, 1409), said housing base (708, 1408) and said housing cap (709, 1409) being separated by a housing split (711,1411) therebetween when said housing (706,1406) is compressed by said strap clamp (707, 1407).

14. The spherical bearing (700, 1400, 1500) according to any of claims 1 to 12, the spherical bearing (700, 1400, 1500) further comprising: a two-piece housing (706, 1406,) having a housing base (708, 1408) and a housing cap (709,1409), said housing base (708,1408) and said housing cap (709, 1409) being separated by a housing split (711, 1411) therebetween when said housing is compressed by said strap clamp (707, 1407); and said housing base (708, 1408) and said housing cap (709, 1409,) having a recess (710, 1410) for positioning said strap clamp (707, 1407) when said housing (706, 1406) is compressed by said strap clamp (707, 1407).

15. The spherical bearing (700,1400,1500) according to any one of claims 1 to 14, wherein the bearing (700, 1400, 1500) is shaped to engage and conform to an external object (109, 207, 506) that is a shaft or that is a round object.

16. A system comprising the spherical bearing (700, 1400, 1500) according to any one of claims 1 to 15 and the external object (109, 207, 506), wherein said spherical core (700a,800) has a spherical core diameter and the external object (109, 207, 506) has an object diameter wherein the ratio of said spherical core diameter to said object diameter is greater than about 1.5.

## Patentansprüche

1. Sphärisches Lager (700, 1400, 1500) zum lösbaren Befestigen einer Halterung an einem externen Objekt (109, 207, 506), wobei das Lager (700, 1400, 1500) umfasst: einen sphärischen Kern (700a, 800) mit einer Oberseite, einer Unterseite, einem Zentrum, einem sphärischen Außenumfang und einem kreisförmigen Loch (701, 801) durch das Zentrum des sphärischen Kerns (700a, 800) zum Anbringen des sphärischen Kerns (700a, 800) an dem externen Objekt (109), 207, 506), wobei sich das kreisförmige Loch (701, 801) von der Oberseite zu der Unterseite des sphärischen Kerns (700a, 800) erstreckt, wobei radial um das kreisförmige Loch (701, 801) herum eine Mehrzahl von Segmenten (704, 804) positioniert sind, wobei die Segmente (704), 804) nur durch eine Mehrzahl von äußeren Entlastungsschnitten (702, 802), die in dem sphärischen Außenumfang ausgebildet sind, und einen einzelnen Kernschlitz (701a) definiert sind, der sich von der Oberseite des kreisförmigen Lochs (701, 801) entlang des sphärischen Außenumfangs bis zur Unterseite des kreisförmigen Lochs (701, 801) erstreckt, wobei innere Entlastungsschnitte, die sich um das kreisförmige Loch (701, 801) herum erstrecken, fehlen, wobei eine Mehrzahl von Biegepunkten, wobei jeder Punkt an einem inneren Ende eines der äußeren Entlastungsschnitte (702, 802) ausgebildet ist, in dem sphärischen Kern (700a, 800) vorgesehen sind;
ein flexibles Gehäuse (706, 1406), das den sphärischen Kern (700a, 800) umgibt, wobei das flexible Gehäuse (706, 1406) dazu in der Lage ist, die Halterung zu tragen; und
einen lösbaren Klemmmechanismus (707, 1407) zum radialen Klemmen des flexiblen Gehäuses (706, 1406), um den sphärischen Kern (700a, 800) zusammenzudrücken, wobei der Klemmmechanismus (707, 1407) so positioniert ist, dass er den Durchmesser des flexiblen Gehäuses (706, 1406) reduziert, wenn der Klemmmechanismus (707), 1407) festgezogen wird, um zu bewirken, dass die Segmente (704, 804) um die Biegepunkte ausgelenkt werden und sich an die Außenfläche des externen Objekts (109, 207, 506) anpassen, wodurch der sphärische Kern (700a, 800) an dem externen Objekt (109, 207, 506) und das Gehäuse an dem sphärischen Kern (700a, 800) befestigt werden.

2. Sphärisches Lager (700, 1400, 1500) nach Anspruch 1, wobei der sphärische Kern (700a, 800, 900) kugelförmig ist und sich der sphärische Außenumfang über die gesamte Oberfläche des sphärischen Kerns (700a, 800, 900) mit Ausnahme des kreisförmigen Lochs (701, 801) erstreckt.

3. Sphärisches Lager (700, 1400, 1500) nach einem der Ansprüche 1 oder 2, wobei das sphärische Lager (700, 1400, 1500) einen abgeflachten sphärischen Kern (700a) aufweist, wobei sich der sphärische Außenumfang von der Oberseite bis zur Unterseite des sphärischen Kerns (700a) erstreckt.

4. Sphärisches Lager (700, 1400, 1500) nach einem der Ansprüche 1 bis 3, wobei sich die Mehrzahl der äußeren Entlastungsschnitte (702, 802) von der Oberseite bis zur Unterseite des sphärischen Kerns (700a, 800) erstrecken.

5. Sphärisches Lager (700, 1400, 1500) nach einem der Ansprüche 1 bis 4, wobei die Halterung an dem flexiblen Gehäuse (706, 1406) des sphärischen Lagers (700, 1400, 1500) angebracht ist.

6. Sphärisches Lager (700, 1400, 1500) nach einem der Ansprüche 1 bis 5, wobei die Halterung durch Halten der Halterung in der gewünschten Position positioniert und durch Festziehen einer einzigen Klemme (707, 1407) an dem Gehäuse (706, 1406) fixiert werden kann.

7. Sphärisches Lager (700, 1400, 1500) nach einem der Ansprüche 1 bis 6, wobei ein Entlastungsschnitt (701a, 801a) den sphärischen Kern (700a, 800) zwischen dem kreisförmigen Loch (701, 801) und dem sphärischen Außenumfang des sphärischen Kerns (700a, 800) spaltet, um die Flexibilität des sphärischen Kerns (700a, 800) zu erhöhen, wenn er durch das Gehäuse zusammengedrückt wird.

8. Sphärisches Lager (700, 1400, 1500) nach einem der Ansprüche 1 bis 7, wobei mindestens ein Entlastungsschnitt (701a, 801a) eine Seite des Gehäuses spaltet, wobei der mindestens eine Entlastungsschnitt Raum zum Zusammendrücken des Gehäuses und zum Festlegen des Lagers schafft.

9. Sphärisches Lager (700, 1400, 1500) nach einem der Ansprüche 1 bis 8, wobei die Biegestellen von dem kreisförmigen Loch (701, 801) so beabstandet sind, dass der von dem Gehäuse auf die Segmente (704, 804) ausgeübte Druck die Segmente (704, 804) veranlasst, sich in Richtung auf das externe Objekt (109, 207, 506) auszulenken, um einen gleichmäßigen Kontakt der Segmente (704, 804) mit dem externen Objekt (109, 207, 506) zu schaffen.

10. Sphärisches Lager (700, 1400, 1500) nach einem der Ansprüche 1 bis 9, wobei der sphärische Kern (700a, 800) und das Gehäuse mittels Entlastungsschnitten modifiziert sind, um die Unbeweglichkeit zu maximieren, wenn das Lager an einem externen Objekt (109, 207, 506), das ein Schaft ist, geklemmt wird, unabhängig von der Ausrichtung der Kern-Entlastungsschnitte relativ zu den Gehäuse-Entlastungsschnitten.

11. Sphärisches Lager (700, 1400, 1500) nach einem der Ansprüche 1 bis 10, wobei
das sphärische Lager (700, 1400, 1500) ferner umfasst
eine lösbare Bandklemme (707, 1407, 1507),
wobei die Bandklemme (707, 1407, 1507) umfasst:
einen umlaufenden Gurt (707, 1407, 1507), wobei sich der Gurt um den Umfang des Gehäuses (706, 1406) herum erstreckt; und
einen Bandstraffer (712, 1412, 1512), wobei der Bandstraffer (712, 1412, 1512) so angeordnet ist, dass er den Durchmesser des umlaufenden Gurtes (707, 1407, 1507) reduziert, um eine Umfangskompression um das Gehäuse (706, 1406) herum auszuüben, um den sphärischen Kern (700a, 800) zusammenzudrücken und den Durchmesser des Gehäuses (706, 1406) zu verringern, wenn der Klemmmechanismus (707, 1407, 1507) angezogen wird, um zu bewirken, dass die Segmente (704, 804) um die Biegepunkte ausgelenkt werden und sich an die Außenfläche des externen Objekts (109, 207, 506) anpassen.

12. Sphärisches Lager (700, 1400, 1500) nach einem der Ansprüche 1 bis 10,
wobei das Gehäuse ein zweiteiliges flexibles Gehäuse ist (706, 1406) und
wobei der lösbare Klemmmechanismus (707, 1407, 1507) eine Bandklemme (707, 1407, 1507) umfasst, wobei die Bandklemme (707, 1407, 1507) das Zusammendrücken des zweiteiligen flexiblen Gehäuses (706, 1406) ermöglicht, um den sphärischen Kern (700a, 800) zusammenzudrücken und ein externes Objekt (109, 207, 506) zu befestigen.

13. Sphärisches Lager (700, 1400, 1500) nach einem der Ansprüche 1 bis 12, wobei das Gehäuse ein zweiteiliges Gehäuse (706, 1406) mit einer Gehäusebasis (708, 1408) und einem Gehäusedeckel (709, 1409) ist, wobei die Gehäusebasis (708, 1408) und der Gehäusedeckel (709, 1409) durch einen Gehäuseschlitz (711, 1411) dazwischen getrennt sind, wenn das Gehäuse (706, 1406) durch die Bandklemme (707, 1407) zusammengedrückt wird.

14. Sphärisches Lager (700, 1400, 1500) nach einem der Ansprüche 1 bis 12, wobei das sphärische Lager (700, 1400, 1500) ferner umfasst:
ein zweiteiliges Gehäuse (706, 1406) mit einer Gehäusebasis (708, 1408) und einem Gehäusedeckel (709, 1409), wobei die Gehäusebasis (708, 1408) und der Gehäusedeckel (709, 1409) durch einen Gehäuseschlitz (711, 1411) dazwischen getrennt sind, wenn das Gehäuse durch die Bandklemme (707, 1407) zusammengedrückt wird; und
wobei die Gehäusebasis (708, 1408) und der Gehäusedeckel (709, 1409) eine Aussparung (710, 1410, 1610) zum Positionieren der Bandklemme (707, 1407) aufweisen, wenn das Gehäuse (706, 1406) durch die Bandklemme (707, 1407) zusammengedrückt wird.

15. Sphärisches Lager (700, 1400, 1500) nach einem der Ansprüche 1 bis 14, wobei das Lager (700, 1400, 1500) so geformt ist, dass es mit einem externen Objekt (109, 207, 506), das ein Schaft oder ein runder Gegenstand ist, in Eingriff kommt und sich an diesen anpasst.

16. System, das das sphärische Lager (700, 1400, 1500) nach einem der Ansprüche 1 bis 15 und das externe Objekt (109, 207, 506) umfasst,
wobei der sphärische Kern (700a, 800) einen Durchmesser des sphärischen Kerns und das externe Objekt (109, 207, 506) einen Durchmesser des Objekts aufweisen, wobei das Verhältnis des Durchmessers des sphärischen Kerns zu dem Durchmesser des Objekts größer als etwa 1,5 ist.

## Revendications

1. Palier à rotule (700, 1400, 1500) pour immobiliser de manière libérable une fixation à un objet externe (109, 207, 506), ledit palier (700, 1400, 1500) comprenant : un noyau sphérique (700a, 800) ayant un dessus, un dessous, un centre, une périphérie extérieure sphérique et un trou annulaire (701, 801) à travers ledit centre dudit noyau sphérique (700a, 800) pour ajouter ledit noyau sphérique (700a, 800) à l'objet externe (109, 207, 506), ledit trou annulaire (701, 801) s'étendant dudit dessus audit dessous dudit noyau sphérique (700a, 800), dans lequel une pluralité de segments (704, 804) est positionnée radialement autour dudit trou annulaire (701, 801), lesdits segments (704, 804) étant uniquement définis par une pluralité d'entailles extérieures en relief (702, 802) formées dans ladite périphérie extérieure sphérique et une fente de noyau unique (701a, 801a) s'étendant à partir du dessus dudit trou annulaire (701, 801) le long de ladite périphérie extérieure sphérique jusqu'au dessous dudit trou annulaire (701, 801), dans lequel des entailles intérieures en relief s'étendant autour dudit trou annulaire (701, 801) sont absentes, dans lequel une pluralité de points de flexion de déviation, chaque dit point étant formé sur une extrémité intérieure de ladite entailles extérieure en relief (702, 802), est prévue dans ledit noyau sphérique (700a, 800) ; un boîtier souple (706, 1406) entourant ledit noyau sphérique (700a, 800), ledit boîtier souple (706, 1406) étant capable de supporter la fixation ; et un mécanisme de serrage libérable (707, 1407) pour serrer radialement ledit boîtier souple (706, 1406) pour comprimer ledit noyau sphérique (700a, 800), ledit mécanisme de serrage (707, 1407) étant positionné pour réduire le diamètre dudit boîtier souple (706, 1406) lorsque ledit mécanisme de serrage (707, 1407) est serré pour amener lesdits segments (704, 804) à dévier autour desdits points de flexion de déviation et s'adapter à la surface extérieure de l'objet externe (109, 207, 506), en immobilisant ainsi ledit noyau sphérique (700a, 800) sur l'objet externe (109, 207, 506) et en immobilisant ledit boîtier sur ledit noyau sphérique (700a, 800).

2. Palier à rotule (700, 1400, 1500) selon la revendication 1, ledit noyau sphérique (700a, 800) étant en forme de boule et ladite périphérie extérieure sphérique s'étendant sur toute la surface dudit noyau sphérique (700a, 800) à l'exception dudit trou annulaire (701, 801).

3. Palier à rotule (700, 1400, 1500) selon l'une quelconque des revendications 1 ou 2, ledit palier à rotule (700, 1400, 1500) ayant un noyau sphérique tronqué (700a), ladite périphérie extérieure sphérique s'étendant dudit dessus audit dessous dudit noyau sphérique (700a, 800).

4. Palier à rotule (700, 1400, 1500) selon l'une quelconque des revendications 1 à 3, dans lequel ladite pluralité d'entailles extérieures en relief (702, 802) s'étend dudit dessus audit dessous dudit noyau sphérique (700a, 800).

5. Palier à rotule (700, 1400, 1500) selon l'une quelconque des revendications 1 à 4, la fixation étant montée sur ledit boîtier souple (706, 1406) dudit palier à rotule (700, 1400, 1500).

6. Palier à rotule (700, 1400, 1500) selon l'une quelconque des revendications 1 à 5, dans lequel la fixation peut être positionnée en maintenant la fixation dans la position voulue et peut être immobilisée en serrant un collier unique (707, 1407, 1507) sur ledit boîtier (706, 1406).

7. Palier à rotule (700, 1400, 1500) selon l'une quelconque des revendications 1 à 6, dans lequel une entaille en relief (701a, 801a) divise ledit noyau sphérique (700a, 800) entre ledit trou annulaire (701, 801) et ladite périphérie extérieure sphérique dudit noyau sphérique (700a, 800) pour augmenter la souplesse dudit noyau sphérique (700a, 800) lorsqu'il est comprimé par ledit boîtier.

8. Palier à rotule (700, 1400, 1500) selon l'une quelconque des revendications 1 à 7, dans lequel au moins une entaille en relief (701a, 801a) divise un côté dudit boîtier, ladite au moins une entaille en relief fournissant de l'espace pour comprimer ledit boîtier et immobiliser ledit palier.

9. Palier à rotule (700, 1400, 1500) selon l'une quelconque des revendications 1 à 8, dans lequel lesdits points de flexion sont déplacés à partir dudit trou annulaire (701, 801) de telle sorte qu'une pression appliquée par ledit boîtier sur lesdits segments (704, 804) amène les segments (704, 804) à dévier vers l'objet externe (109, 207, 506) pour assurer un contact uniforme desdits segments (704, 804) avec l'objet externe (109, 207, 506).

10. Palier à rotule (700, 1400, 1500) selon l'une quelconque des revendications 1 à 9, dans lequel ledit noyau sphérique (700a, 800) et ledit boîtier sont modifiés avec des entailles en relief pour maximiser l'immobilité lorsque ledit palier est serré sur un objet externe (109, 207, 506) qui est un arbre quelle que soit l'orientation des entailles de noyau en relief par rapport aux entailles de boîtier en relief.

11. Palier à rotule (700, 1400, 1500) selon l'une quelconque des revendications 1 à 10, ledit palier à rotule (700, 1400, 1500) comprenant en outre un collier à bande libérable (707, 1407, 1507), ledit collier à bande (707, 1407, 1507) comprenant : une bande circonférentielle (707, 1407, 1507), ladite bande s'étendant autour de la circonférence dudit boîtier (706, 1406) ; et un organe de serrage de bande (712, 1412, 1512), ledit organe de serrage de bande (712, 1412, 1512) étant positionné pour réduire le diamètre de ladite bande circonférentielle (707, 1407, 1507) pour exercer une compression circulaire autour dudit boîtier (706, 1406) pour comprimer ledit noyau sphérique (700a, 800) et réduire le diamètre dudit boîtier (706, 1406) lorsque ledit mécanisme de serrage (707, 1407, 1507) est serré pour amener lesdits segments (704, 804) à dévier autour desdits points de flexion de déviation et s'adapter à la surface extérieure de l'objet externe (109, 207, 506).

12. Palier à rotule (700, 1400, 1500) selon l'une quelconque des revendications 1 à 10, ledit boîtier étant un boîtier souple en deux pièces (706, 1406) et ledit mécanisme de serrage libérable (707, 1407, 1507) comprenant un collier à bande (707, 1407, 1507), ledit collier à bande (707, 1407, 1507) permettant une compression dudit boîtier souple en deux pièces (706, 1406) pour comprimer ledit noyau sphérique (700a, 800) et immobiliser un objet externe (109, 207, 506).

13. Palier à rotule (700, 1400, 1500) selon l'une quelconque des revendications 1 à 12, ledit boîtier étant un boîtier en deux pièces (706, 1406) ayant une base de boîtier (708, 1408) et une coiffe de boîtier (709, 1409), ladite base de boîtier (708, 1408) et ladite coiffe de boîtier (709, 1409) étant séparées par une fente de boîtier (711, 1411) entre celles-ci lorsque ledit boîtier (706, 1406) est comprimé par ledit collier à bande (707, 1407).

14. Palier à rotule (700, 1400, 1500) selon l'une quelconque des revendications 1 à 12, le palier à rotule (700, 1400, 1500) comprenant en outre : un boîtier en deux pièces (706, 1406) ayant une base de boîtier (708, 1408) et une coiffe de boîtier (709, 1409), ladite base de boîtier (708, 1408) et ladite coiffe de boîtier (709, 1409) étant séparées par une fente de boîtier (711, 1411) entre celles-ci lorsque ledit boîtier est comprimé par ledit collier à bande (707, 1407) ; et ladite base de boîtier (708, 1408) et ladite coiffe de boîtier (709, 1409) ayant un évidement (710, 1410) pour positionner ledit collier à bande (707, 1407) lorsque ledit boîtier (706, 1406) est comprimé par ledit collier à bande (707, 1407).

15. Palier à rotule (700, 1400, 1500) selon l'une quelconque des revendications 1 à 14, dans lequel le palier (700, 1400, 1500) est formé pour venir en prise avec un objet externe (109, 207, 506) qui est un arbre ou qui est un objet rond, et s'adapter à celui-ci.

16. Système comprenant le palier à rotule (700, 1400, 1500) selon l'une quelconque des revendications 1 à 15 et l'objet externe (109,207,506), dans lequel ledit noyau sphérique (700a, 800) a un diamètre de noyau sphérique et l'objet externe (109, 207, 506) a un diamètre d'objet, dans lequel le rapport dudit diamètre de noyau sphérique sur ledit diamètre d'objet est supérieur à environ 1,5.
